# EUROPEAN PATENT APPLICATION

(11) **EP 1 813 476 A2**
(43) Date of publication of application: **01.08.2007**
(21) Application number: 07100700.9
(22) Date of filing: 17.01.2007
(51) Int. Cl.: B60R 11/00

(54) **Arrangement for lorries for mounting accessories, in particular lamps**

(30) Priority: 30.01.2006 DK 200600133
(71) Applicant: Cartex Autofashion ApS, 8310 Tranbjerg (DK)
(72) Inventor: Larsen, Hans Ole, 8320, Mårslet (DK)
(74) Representative: Nielsen, Leif

(57) **Abstract**

There is disclosed a mounting arrangement including a tubular bracket 1 which has a largely rectilinear part 2 and an end part 3 extending largely perpendicularly to the central part 2. At each of the outermost ends 5 there is provided a threaded support holder 6 that interacts with a threaded adjustable fixing fitting. 10. Furthermore, there are provided two clamping fittings 25, each with an annular squeezing part 26 squeezing around the bracket at a central part thereof. The fittings 10 and 25 are clamped/fixed on the roof, roof gutter, sun visor and/or window opening of the lorry. Due to the adjustability in the fixing means 10, the bracket may be clamped so that vibrations are avoided.

## Description

### Field of the Invention

The present invention concerns an arrangement for lorries for mounting accessories, in particular lamps, including a tubular bracket and fixing means for securing the bracket to the cab of the lorry.

### Background of the Invention

It is often undesirable to mount accessories by fastening directly to the driver' s cab as drilling for fastening may form basis for rust formation. Furthermore, it is difficult to change the arrangement of accessories which are fastened directly on the cab, since holes are left after mounting.

Various mounting arrangement are known, e.g. brackets in the form of so-called kangaroo-catchers on which auxiliary equipment, as e.g. lamps, horns and similar, can be fitted. Such kangaroo-catchers are disposed relatively low under the windshield of the driver' s cabin, typically by fastening on the front bumper. Due to the position, there is a limitation to the type of accessories that can be mounted thereon. Also, lamp brackets for disposition above the front bumper are known.

Examples of mounting arrangements are, among others, known from US 1 761 937, US 1472 523, US 5 000 480, US 4 515 393 and US 2 783 367.

There is a need for placing accessories higher on the cab, preferably at a position over the windshield at the front edge of the driver' s cab. Such accessories may be lamps, e.g. auxiliary lamps and warning lamps, as well as horns, antennas or other equipment one does not want to fasten directly on the cab.

The prior art mounting arrangements are usually designed with special fittings to be suited for a single type or brand of vehicle. Mounting arrangements to be fastened by screwing into the roof are also known. Normally, this is unwanted and often vibrations will occur which may damage the equipment and/or the cab. Such arrangements include brackets having complicated, bent shapes that only fit one type or brand of vehicle. Therefore, this is frequently a relatively expensive equipment, and furthermore there is often a need for adapting the means for fastening the accessory to the bracket.

For several years there has thus existed a need for a mounting arrangement which may readily be used for different types of cabs in a simple way and which enables simple mounting of various accessories as well as rearranging the accessories.

### Object of the Invention

It is thus the purpose of the present invention to indicate a mounting arrangement which may be produced with few standard components that may be adapted in a simple way to a large number of vehicle types and brands, and which is preferably suited for disposition above the windshield at the front end of the driver' s cab of a lorry. It is also an object to indicate a mounting arrangement that enables the user to mount various accessories in a simple way.

### Description of the Invention

This is achieved according to the present invention with an arrangement of the type specified in the introduction which is peculiar in that the bracket has a largely rectilinear central part and an end part at each end thereof extending largely perpendicularly to the central part, that the extreme end of each end part is provided with a threaded support holder, that the fixing means include a threaded fixing fitting for interacting with the threaded support holder and at least two clamping fittings, each having an annular squeezing part for squeezing around the bracket at the central part thereof.

In such arrangement, the rectilinear part of the bracket can be located at the front end of the cab roof at a position above the windshield. The clamping fittings may be secured by clamping around the tubular bracket at suitable positions and can be used for fastening the bracket to suitable positions above the windshield, e.g. in the roof gutter, sun visor, or at the front window opening. The fixing means, which are mounted in the threaded support holders, can be adjusted depending on the shape of the cab. Hereby, they may be clamped against the roof so that vibrations may be avoided.

The bracket may in a simple way be clamped firmly as after mounting and clamping the clamping fittings about the central parts of the bracket, an adjustment of the fixing means is performed at the ends of the bracket, whereby the bracket is fixed. As clamping fittings with annular squeezing parts are used, the bracket can be placed on surfaces with varying inclination/curvature, as the bracket, after mounting the clamping fittings on the cab, are just rotated to correct position, whereafter the fixing means of the end parts are bearing against the roof of the cab. Then the clamping fitting is clamped and the fixing means are adjusted. After that the accessories can be fitted.

According to a further embodiment, the mounting arrangement according to the invention is peculiar in that it also includes means for fastening the accessory to the bracket. Each of these fastening means may be designed with an annular clamping member for squeezing around the bracket at the part thereof on which the accessory is to be mounted. Hereby it will be possible to mount the accessory correctly, irrespectively of the angle/inclination of the surface upon which the bracket is mounted. The annular squeeze part will usually include an opening annular bracket where extensions of the annular part is provided with holes for receiving a bolt clamped for establishing clamping. These holes may preferably be used simultaneously for fastening adapters for the squeeze part or for clamping the squeeze part directly to the lorry.

According to a further embodiment, the arrangement according to the invention is peculiar in that each means for fastening the accessory to the bracket is identical to the clamping fitting. Hereby is achieved a particularly simple design with few individual parts so that the mounting arrangement will be technically simple to produce.

According to a further embodiment, the mounting arrangement according to the invention is peculiar in that each means for fastening the accessory to the bracket is two-part and includes an adapter adapted for disposition between the squeeze part and the accessory. This enables in a simple way adaptation to a very large number of various types of auxiliary equipment, just by using different adapter pieces which are adapted to the individual types of equipment.

According to a further embodiment, the mounting arrangement according to the invention is peculiar in that each clamping fitting is two-part and includes an adapter adapted for disposition between the squeeze part and the lorry. This enables in a simple way adaptation to a very large number of various types and brands of vehicles, just by using different adapter parts which are adapted to the individual various brands and types of vehicles.

When fastening means and clamping fittings are two-part, adapters will often be fastened to the annular squeeze part by screwing. The adapters themselves will usually consist of simple angularly bent plate members provided with holes for fastening to the squeeze part and for fastening to the mounting fittings of the auxiliary equipment and the mounting points of the lorry, respectively.

According to a further embodiment, the mounting arrangement according to the invention is peculiar in that the fixing fitting includes a press stud for bearing against the driver' s cab. Thus the press stud is just clamped against the surface so that penetration of the wall of the cab is avoided. Moreover, it is possible to secure correct and secure disposition of the press stud by using double-adhesive tape.

According to a further embodiment, the mounting arrangement according to the invention is peculiar in that the press stud is fastened to a threaded part of the fixing fitting so that the press stud is angularly adjustable in relation to the support holder of the bracket. Hereby is achieved that the contact surface on the surface of the cab becomes as large as possible, irrespectively of the inclination of the surface to which the bracket is fixed. The angular adjustability may e.g. be achieved by using a press stud that includes a ball joint between a threaded rod and foot plate. The foot plate of the press stud is preferably made of a soft material, as e.g. plastic, to avoid damage on the paint of the cab. Moreover, it is possible to use intermediate washers between the various parts of the mounting arrangement as well as between part thereof and the driver' s cab. These washers can be made of soft material, e.g. plastic or rubber.

According to a further embodiment, the mounting arrangement according to the invention is peculiar in that the fixing fitting includes a squeeze support holder, preferably for clamping on a roof gutter on the driver' s cab. This provides a particularly simple adaptation and fastening to lorries where the cab is provided with a roof gutter. In practice, it has appeared to be sufficient to make two sizes of the squeeze support holder in order to obtain adaptability to largely all lorries with roof gutters.

According to a further embodiment, the mounting arrangement according to the invention is peculiar in that the fixing fitting includes a clamping bolt for passing through the wall of the driver' s cab. In some cases, it is not possible to avoid fastening in the wall. In order to avoid vibrations in the bracket, it may also be possible to fasten the ends in the wall. In the present application, the term "wall" means the roof or another point in the wall.

According to a further embodiment, the mounting arrangement according to the invention is peculiar in that at least the end parts of the bracket are made from hollow tubes, that each of the end parts of the bracket are angularly bent, preferably about 90°, and that the support holder is disposed inside the end of the tube. A simple design is hereby achieved as the threaded support holder may be mounted in a simple way at the end of the hollow tube. This may e.g. be effected by a plate with a threaded hole being clamped, screwed or welded in the tube. In general, it is thus preferred that the threaded parts include a threaded opening in the bracket and a threaded rod in the fixing fitting. However, the reverse is also possible.

According to a further embodiment, the mounting arrangement according to the invention is peculiar in that the bracket is made of a bent hollow tube. This is a simple embodiment providing that the weight of the mounting arrangement can be kept low, thereby avoiding the risk of damaging vibrations to a higher degree.

### Description of the Drawing

In the following, the invention will be described in more detail with reference to the enclosed drawing, where:
- Fig. 1: shows a tubular bracket for use in a mounting arrangement according to the invention;
- Fig. 2: shows a partial view of a detail of the bracket shown in Fig. 1;
- Figs. 3-5: show different fixing fittings for use in the mounting arrangement according to the invention;
- Figs. 6-13: show various embodiments of mounting arrangements for lorries which, in addition to the bracket and the fixing fittings, also display clamping fittings; and
- Figs. 14-21: show different embodiments of sets of fixing fittings and clamping fittings for use in the mounting arrangement according to the invention.

### Detailed description of the invention

A tubular bracket 1 includes a largely rectilinear or straight central part 2. At each end of the central part there is an end part 3 extending largely perpendicularly to the rectilinear part. The end parts 3 have an angular bend 4 of 90° at the extreme end 5. The tubular bracket 1 is made of one hollow tube which is bent. Alternatively, the tubular bracket 1 can be made of a plurality of separate pieces that are joined together. At least the end parts 3 will then be of hollow tubes.

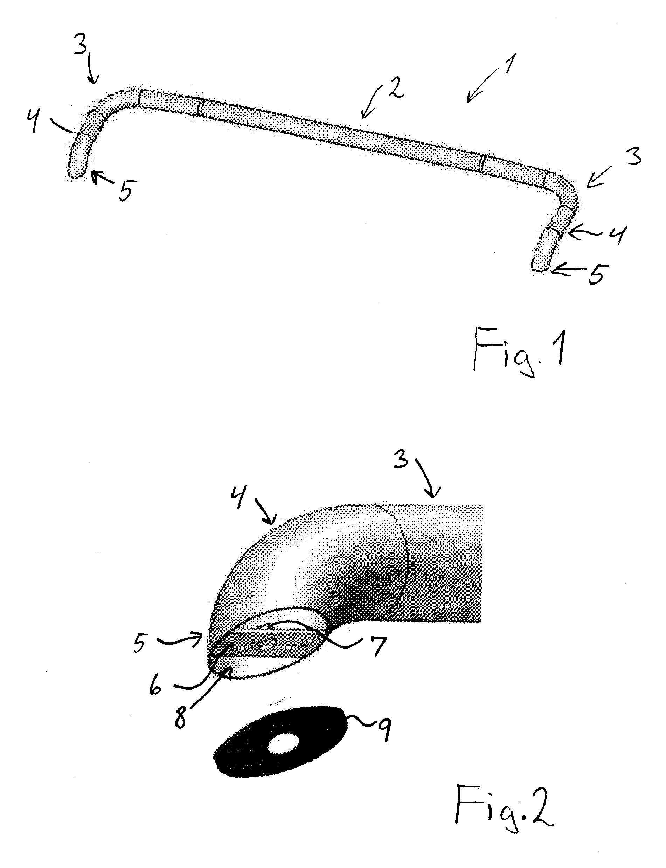

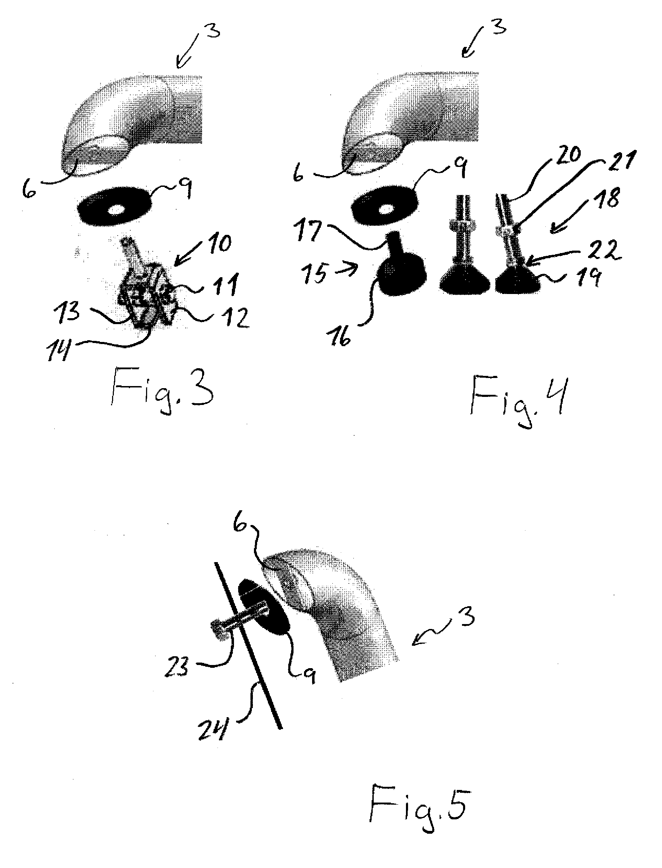

Fig. 2 shows a support holder 6 which is provided with a threaded stub 7 and fastened in the opening 8 of the tube. Furthermore, there is provided a washer 9 of plastic material.

Fig. 3 shows a squeeze support holder 10 intended to be fastened on a roof gutter on a driver' s cab to which the mounting arrangement is fastened. The squeeze support holder 10 has a screw 11 for clamping on the roof gutter. Moreover, the clamping fitting has a first leg 12 extending down into the roof gutter, and a second leg 13 with an angularly bent part 14 for engaging under the roof gutter.

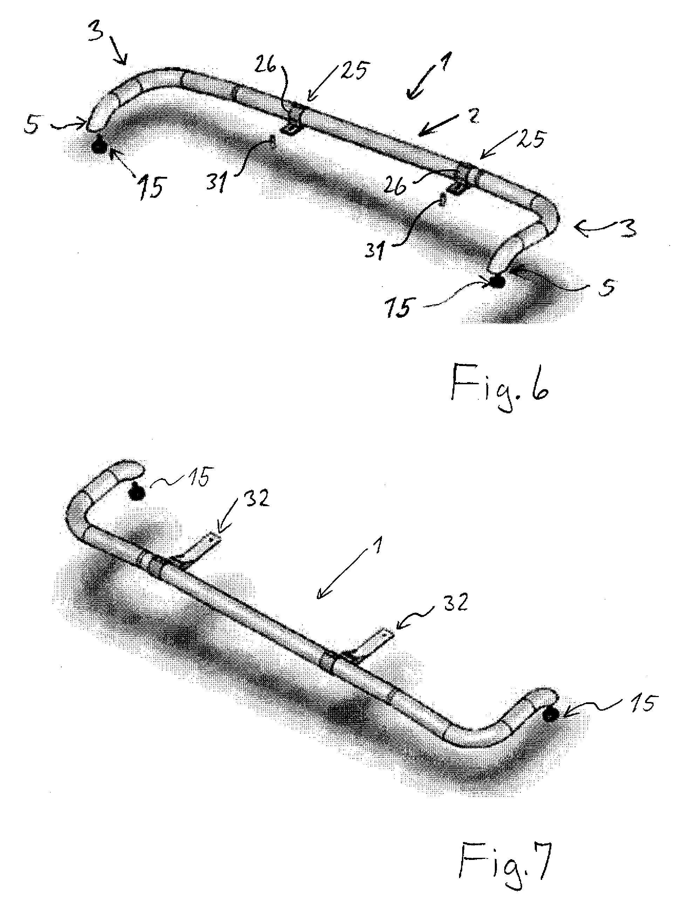

Fig. 4 shows a second embodiment of fixing fitting. There is illustrated a press stud 15 consisting of a soft foot part 16 and a threaded rod 17 for interacting with the threaded stub 7 in the threaded support holder 6. Furthermore, there is illustrated a press stud 18 which also includes a foot part 19 and a threaded rod 20. On the threaded rod 20 there is provided a nut 21 which is used as lock nut to secure mutual position of the press stud 18 and the threaded support holder 6. In this embodiment, a ball joint 22 is provided between the threaded rod 20 and the foot part 19 so that the press stud is angularly adjustable in relation to the support holder 6. A corresponding lock nut may also be used in the fixing fitting shown in Fig. 3.

Fig. 5 illustrates a clamping bolt 23 which is intended for passing through the wall or roof 24 of the cab.

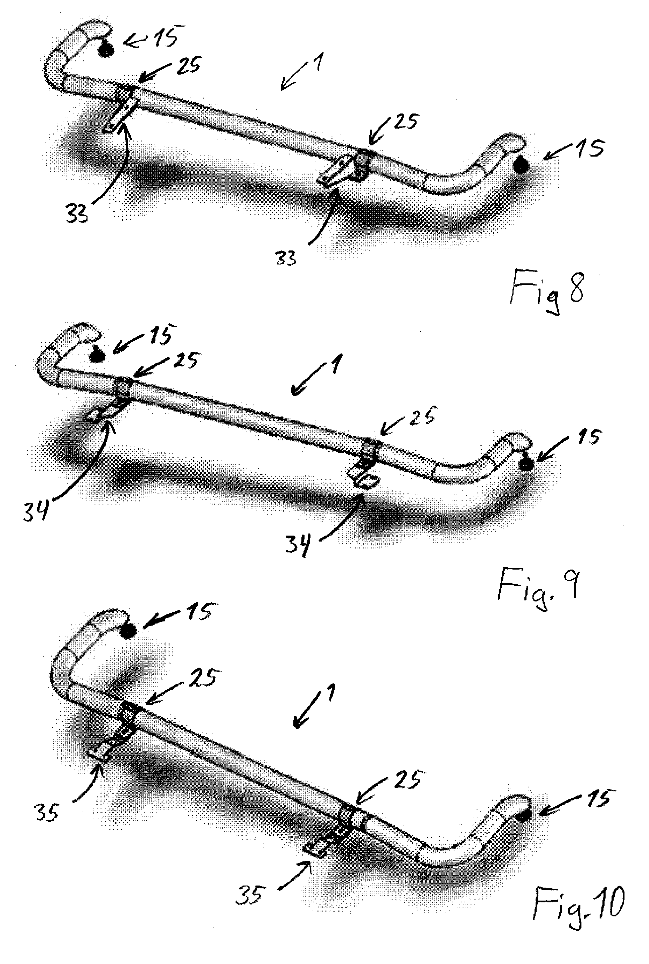

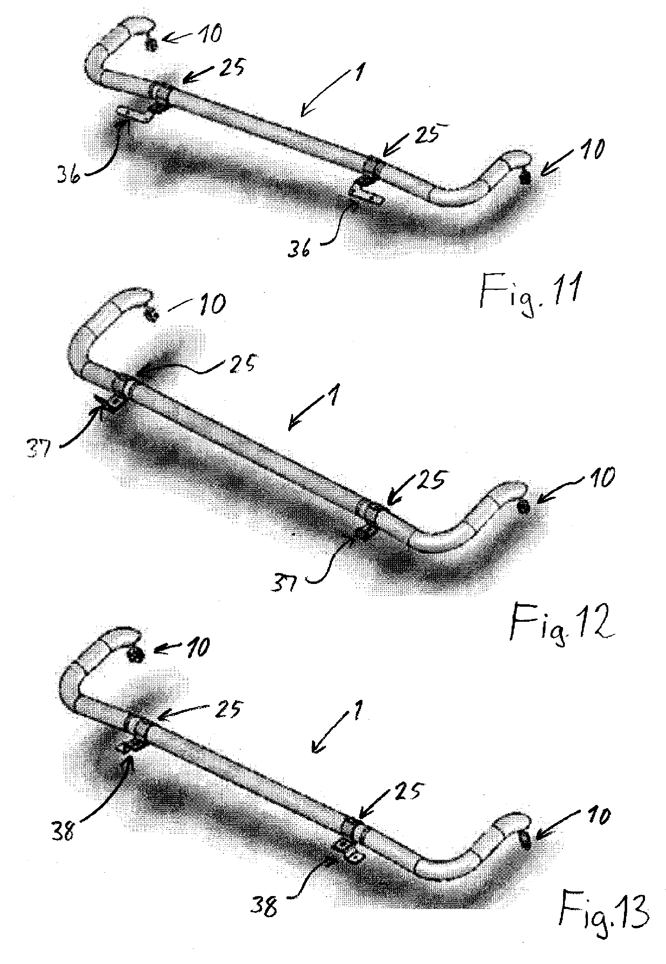

Figs. 6-13 show various forms of mounting arrangement that all make use of the tubular bracket 1 and fixing fittings 10, 15, 23 for interacting with the support holder 6.

Furthermore, in these Figures there are shown two clamping fittings 25 which are disposed on a centre part of the tubular bracket. The clamping fittings 25 serve to fasten at the front side of a driver' s cab at a position above the windshield, while the fixing fittings fix the outer ends 5 of the bracket to the roof or wall of the cab. Interaction between clamping fittings 25 and fixing fittings 10, 15, 23 prevent vibrations and provide secure fastening of the bracket 1.

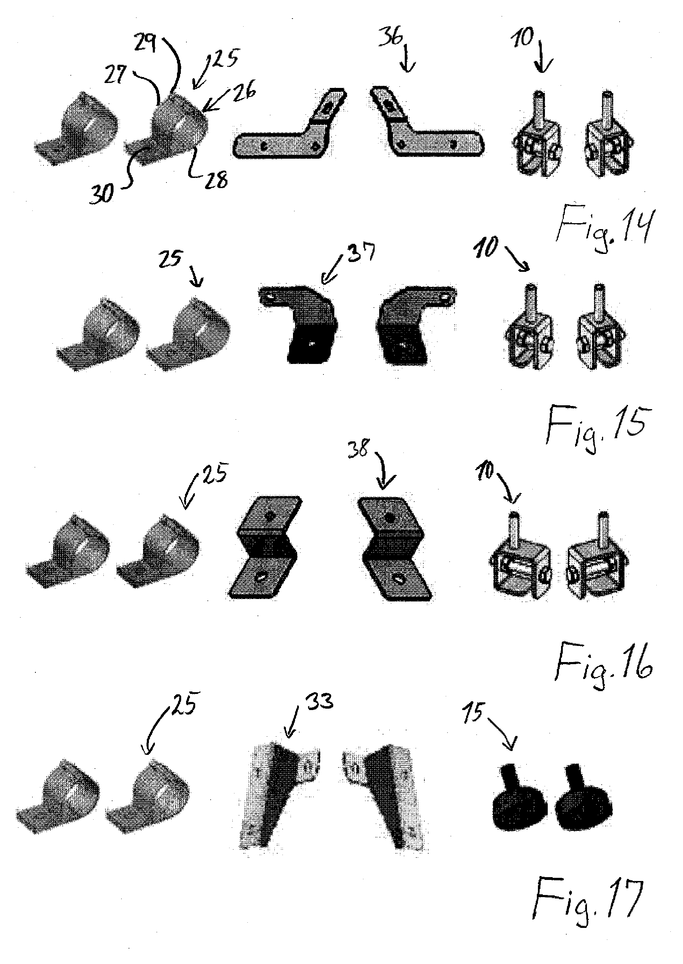

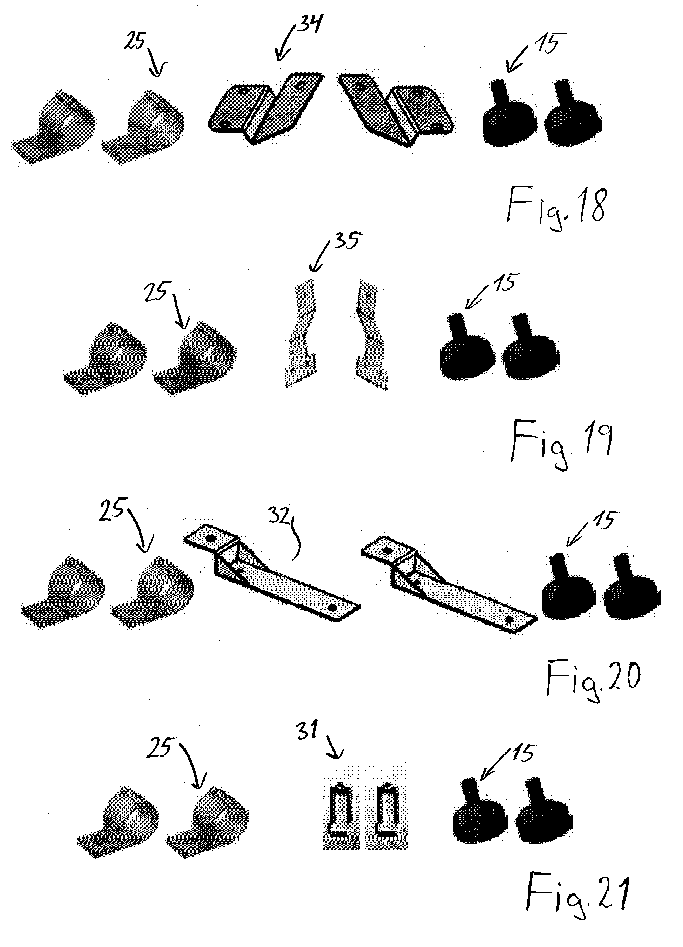

Fig. 6 illustrates that each of the clamping fittings 25 have an annular squeeze part 26 that squeezes around the bracket when tensioned. The clamping fittings 25 appear more clearly in Figs. 14-21. Here it is seen that the clamping fittings are made of two halves 27, 28 which are joined by a hinge part 29 facilitating the mounting. Each of the two parts have an extension provided with a hole 30 (only one shown) which can be aligned for receiving a fastening screw 31.

Alternatively, the clamping fittings 25 can be two-part, and furthermore include an adapter 32-38. The adapter 32-38 is shown in Figs. 7-13 and Figs. 14-20, which show the parts with different sets of clamping fittings/fixing fittings in greater detail.

The adapters 32-38 will be adapted for fastening to the clamping fitting 25 by means of one or more fastening screws or bushings for interaction with the holes 30. The adapter members will thus be fastened to the clamping fitting 25 simultaneously with tightening the latter, for clamping around the tubular bracket.

Moreover, the adapters will include a second end part which is adapted for fastening to the lorry in various ways, either at sun visor, roof gutter or window opening.

As it appears from Figs. 6-21, there will only be need for few individual parts for adapting the mounting arrangement according to the invention to a large number of lorries. The greatest variation will occur in the adapters 32-38. However, we are here speaking of relatively simple bent plate members which are provided with holes for fastening adapter to the clamping fitting 25 and to the lorry.

A fastening fitting, which is identical to the clamping fitting 25, is used for mounting accessories to the bracket. In connection with fastening accessories, there may also be applied a two-part fitting that includes an adapter for adapting to various types of auxiliary equipment.

Auxiliary equipment fastened by means of the mounting means according to the invention may be lamps, horn, warning lights etc.

## Claims

1. An arrangement for lorries for mounting accessories, in particular lamps, including a tubular bracket (1) and fixing means (10, 15, 23) for securing the bracket to the cab of the lorry, **characterised in that** the bracket has a largely rectilinear central part (2) and an end part (3) at each end thereof extending largely perpendicularly to the central part, that the extreme end of each end part (3) is provided with a threaded support holder (6), that the fixing means include a threaded fixing fitting (10, 15, 23) for interacting with the threaded support holder (6) and at least two clamping fittings (25), each having an annular squeezing part (26) for squeezing around the bracket at the central part (2) thereof.

2. Arrangement according to claim 1, **characterised in that** each clamping fitting (25) is two-part and includes an adapter (32-38) which is adapted for disposition between the squeezing part (2) and the lorry.

3. Arrangement according to claim 1 or 2, **characterised in that** the fixing fitting includes a press stud (15) for bearing against the driver' s cab.

4. Arrangement according to claim 3, **characterised in that** the press stud is fastened to a threaded part (20) of the fixing fitting (15) so that the press stud is angularly adjustable in relation to the support holder (6) of the bracket.

5. Arrangement according to claim 1 or 2, **characterised in that** the fixing fitting includes a squeezing support holder (10), preferably for pinching on a roof gutter on the cab.

6. Arrangement according to claim 1 or 2, **characterised in that** the fixing fitting includes a clamping bolt (23) for passing through the wall of the driver' s cab.

7. Arrangement according to any preceding claim, **characterised in that** at least the end parts (3) of the bracket (1) are made from hollow tubes, that each of the end parts of the bracket are angularly bent, preferably about 90°, and that the support holder (6) is disposed inside the end of the tube.

8. Arrangement according to any preceding claim, **characterised in that** it includes means (25) for fastening the accessories to the bracket.

9. Arrangement according to claim 8, **characterised in that** each means (25) for fastening the accessories to the bracket is identical to the clamping fitting (25).

10. Arrangement according to claim 8 or 9, **characterised in that** each means (25) for fastening the accessories to the bracket is two-part and includes an adapter (32-38) which is adapted for disposition between the squeezing part (2) and the accessory.
